(19) **Europäisches Patentamt / European Patent Office / Office européen des brevets**

(11) **EP 4 732 941 A1**

(12) **EUROPEAN PATENT APPLICATION**
published in accordance with Art. 153(4) EPC

(43) Date of publication:
**29.04.2026 Bulletin 2026/18**

(21) Application number: **24882218.1**

(22) Date of filing: **10.10.2024**

(51) International Patent Classification (IPC):
*B01J 13/00* $^{(2006.01)}$  *C01B 33/145* $^{(2006.01)}$

(52) Cooperative Patent Classification (CPC):
**B01J 13/00; C01B 33/145**

(86) International application number:
**PCT/JP2024/036358**

(87) International publication number:
**WO 2025/089105 (01.05.2025 Gazette 2025/18)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **23.10.2023 JP 2023181650**

(71) Applicant: **Resonac Corporation**
**Tokyo 105-7325 (JP)**

(72) Inventors:
• **NAGATA, Ryutaro**
**Tokyo 105-7325 (JP)**
• **ARIFUKU, Motohiro**
**Tokyo 105-7325 (JP)**

(74) Representative: **Hoffmann Eitle**
**Patent- und Rechtsanwälte PartmbB**
**Arabellastraße 30**
**81925 München (DE)**

(54) **PARTICLE DISPERSION LIQUID**

(57) A particle dispersion containing particles and a liquid medium, in which a distance of an HSP value of the particles with respect to an HSP value of the liquid medium is 15.0 MPa$^{0.5}$ or less.

EP 4 732 941 A1

## Description

### Technical Field

The present disclosure relates to a particle dispersion and the like.

### Background Art

In order to produce a member for various industries, a particle dispersion containing particles dispersed in a liquid medium is used. For example, in Patent Literature 1 below, a particle dispersion using silica particles is described.

### Citation List

### Patent Literature

Patent Literature 1: Japanese Unexamined Patent Publication No. 2015-519442

### Summary of Invention

### Technical Problem

When particles and a liquid medium are mixed to obtain a particle dispersion, there are cases where it is required to adjust a viscosity of the particle dispersion with respect to a viscosity of the liquid medium before mixing with the particles. According to the findings of the present inventors, although a viscosity of a liquid medium before mixing with particles is low, there are cases where a viscosity of a particle dispersion obtained by mixing the liquid medium with the particles is high. In this case, for example, after selecting a liquid medium to be used for producing an industrial member, when a particle dispersion is obtained by mixing particles with the liquid medium and a viscosity of the particle dispersion is unexpectedly high, there are cases where it is difficult to obtain sufficient workability.

One aspect of the present disclosure is to provide a particle dispersion containing particles and a liquid medium, which is capable of reducing a viscosity ratio of the particle dispersion with respect to the liquid medium.

### Solution to Problem

The present disclosure relates to [1] to [10] described below and the like in some aspects.

[1] A particle dispersion containing particles and a liquid medium, in which a distance of an HSP value of the particles with respect to an HSP value of the liquid medium is 15.0 MPa$^{0.5}$ or less.

[2] The particle dispersion according to [1], in which the distance of the HSP value of the particles with respect to the HSP value of the liquid medium is 7.5 to 15.0 MPa$^{0.5}$

[3] The particle dispersion according to [1] or [2], in which the liquid medium includes methyl isobutyl ketone.

[4] The particle dispersion according to any one of [1] to [3], in which the liquid medium includes methyl ethyl ketone.

[5] The particle dispersion according to any one of [1] to [4], in which the liquid medium includes a first dispersion medium and a second dispersion medium, and a distance of an HSP value of the second dispersion medium with respect to an HSP value of the first dispersion medium is 5.0 to 15.0 MPa$^{0.5}$.

[6] The particle dispersion according to any one of [1] to [5], in which the liquid medium includes an organic solvent, and a content of the organic solvent is 80% by mass or more on the basis of a total mass of the liquid medium.

[7] The particle dispersion according to any one of [1] to [6], in which the particles contain at least one type selected from the group consisting of silica, ceria, alumina, titania, boron nitride, and calcium titanate.

[8] The particle dispersion according to any one of [1] to [7], in which the particles contain silica.

[9] The particle dispersion according to any one of [1] to [8], in which the particles have a surface treatment agent on surfaces of the particles.

[10] The particle dispersion according to [9], in which the surface treatment agent includes a silane compound having an alkoxysilyl group.

**Advantageous Effects of Invention**

According to one aspect of the present disclosure, it is possible to provide a particle dispersion containing particles and a liquid medium, which is capable of reducing a viscosity ratio of the particle dispersion with respect to the liquid medium.

**Description of Embodiments**

Hereinafter, an embodiment of the present disclosure will be described, but the present disclosure is not limited to such an embodiment.

In the present specification, a numerical range represented by using "to" indicates a range including numerical values described before and after "to" as the minimum value and the maximum value, respectively. "A or more" of a numerical range means A and a range more than A. "A or less" of a numerical range means A and a range less than A. In numerical ranges described in stages in the present specification, the upper limit value or the lower limit value of a numerical range in a certain stage can be arbitrarily combined with the upper limit value or the lower limit value of a numerical range in other stage. In a numerical range described in the present specification, the upper limit value or the lower limit value of the numerical range may be replaced with values described in Examples. "A or B" may include either A or B, and may include both thereof. Materials exemplified in the present specification can be used singly or in combinations of two or more kinds, unless otherwise specified. In a case where there are a plurality of substances corresponding to each component in a composition, the amount of each component in the composition indicates the total amount of the plurality of substances in the composition, unless otherwise specified. The term "step" includes not only an independent step but also a step that cannot be clearly distinguished from other steps as long as the intended action of the step is achieved. The "solid" refers to a nonvolatile content excluding volatile components (water, an organic solvent, and the like) that can be volatilized.

A particle dispersion of the present embodiment contains particles and a liquid medium, and a distance of an HSP value of the particles with respect to an HSP value of the liquid medium (hereinafter, referred to as an "HSP value of the particles with respect to the liquid medium" in some cases) is 15.0 $MPa^{0.5}$ or less.

According to the particle dispersion of the present embodiment, in the particle dispersion containing the particles and the liquid medium, a viscosity ratio of the particle dispersion with respect to the liquid medium (hereinafter, simply referred to as a "viscosity ratio" in some cases) can be reduced. According to the particle dispersion of the present embodiment, in the evaluation shown in Examples below, it is possible to obtain, as the viscosity ratio of the particle dispersion with respect to the liquid medium, for example, 9000 or less (preferably 6000 or less, 3000 or less, 1000 or less, 500 or less, or the like). As a viscosity of a liquid medium to be compared with a viscosity of a particle dispersion, it is possible to use a viscosity (25°C, shear rate of 1 $min^{-1}$) described in Compact Edition Solvent Pocketbook, 1st Edition, edited by the Society of Synthetic Organic Chemistry, Japan (1994), and for a viscosity not described therein, the viscosity can be measured at 25°C and a shear rate of 1 $min^{-1}$ using an E-type viscometer.

In the particle dispersion of the present embodiment, in a state where a solid content of the particle dispersion is adjusted based on a relationship between the viscosity and the solid content of the particle dispersion, it is possible to reduce a viscosity ratio of the particle dispersion with respect to the liquid medium. Specifically, the solid content of the particle dispersion can be adjusted so that a boundary state between a non-Bingham fluid and a dilatant fluid is achieved, and a viscosity (a viscosity in a state of a non-Bingham fluid) of the particle dispersion having such a solid content can be used. In the non-Bingham fluid, a viscosity does not increase with an increase in a rotation frequency (shear rate: the same applies hereinafter) of a viscometer, whereas in the dilatant fluid, a viscosity rapidly increases with an increase in the rotation frequency of the viscometer. The boundary state between the non-Bingham fluid and the dilatant fluid can be confirmed by checking a behavior of the viscosity with respect to the rotation frequency of the viscometer while changing the solid content of the particle dispersion in increments of 5% by mass, and a solid content showing a behavior of the non-Bingham fluid (a behavior in which a viscosity does not increase with an increase in the rotation frequency of the viscometer) can be used as the solid content of the particle dispersion to be compared with a viscosity of the liquid medium. By comparing the viscosities at such a solid content, it becomes easy to determine differences in the viscosity ratio of the particle dispersion with respect to the liquid medium, and the viscosity ratio can be suitably evaluated. The solid content of the particle dispersion may be adjusted by diluting the particle dispersion with a liquid medium having the same composition as the liquid medium of the particle dispersion, and the solid content of the particle dispersion may be adjusted by volatilizing the liquid medium of the particle dispersion.

When the particle dispersion contains components other than the particles and the liquid medium (excluding a surface treatment agent of the particles), according to the particle dispersion of the present embodiment, it is possible to reduce a viscosity ratio of the particle dispersion with respect to the liquid medium in a state where the components other than the particles and the liquid medium (excluding the surface treatment agent of the particles) are removed. When the particle dispersion contains components other than the particles and the liquid medium (excluding a surface treatment agent of the particles), as the viscosity of the particle dispersion, it is possible to measure a viscosity of the particle dispersion in a state where these components are removed.

The use of the particle dispersion of the present embodiment is not particularly limited. The particle dispersion of the present embodiment can be applied to the production or the use of a laminated plate (such as a copper clad laminate), a die-bonding film, a circuit connecting member, a polishing liquid (such as a CMP polishing liquid), a sealing material, an electrode active material for a battery, a transparent conductive transfer film, and the like. For example, the particle dispersion of the present embodiment can be used to produce a semiconductor member, and can be used as slurry for obtaining a laminated plate, an insulating film (such as an insulating film of a sealing material), or the like of a semiconductor member.

The HSP distance of the particles with respect to the liquid medium can be calculated from the following formula on the basis of $\delta_d$ (a dispersion term), $\delta_p$ (a polarization term), and $\delta_h$ (a hydrogen-bond term) in a Hansen solubility parameter (HSP). $\delta_{d1}$, $\delta_{p1}$, and $\delta_{h1}$ are $\delta_d$, $\delta_p$, and $\delta_h$ of the particles, and $\delta_{d2}$, $\delta_{p2}$, and $\delta_{h2}$ are $\delta_d$, $\delta_p$, and $\delta_h$ of the liquid medium.

$$\text{HSP Distance} = \{4 \times (\delta_{d1} - \delta_{d2})^2 + (\delta_{p1} - \delta_{p2})^2 + (\delta_{h1} - \delta_{h2})^2\}^{0.5}$$

Since $\delta_d$, $\delta_p$, and $\delta_h$ of a commonly used substance have a known information source such as a database, for example, $\delta_d$, $\delta_p$, and $\delta_h$ of a desired substance are available by referring to the database. Parameters for the substance that are not registered in the database, for example, can be calculated by using computer software such as HSPiP (Hansen Solubility Parameter in Practice; written by Prof. Steven Abbott and Dr. Yamamoto Hiroshi).

$\delta_{d1}$, $\delta_{p1}$, and $\delta_{h1}$ of the particles can be calculated in the following procedure. First, the particle dispersion is dried to collect the particles, and 16 types of evaluation solvents for which parameters ($\delta_d$, $\delta_p$, and $\delta_h$) are known are prepared. Next, a dispersibility test of particles to be an evaluation target with respect to each of the evaluation solvents is performed, and whether each of the evaluation solvents is a "solvent with excellent dispersibility" or a "solvent with poor dispersibility" is determined. The dispersibility test can be performed by a method described in Examples below. Subsequently, each of the evaluation solvents is plotted in a three-dimensional space (a Hansen space) having $\delta_d$, $\delta_p$, and $\delta_h$ as coordinate axes, and then, a virtual true sphere including all the "solvents with excellent dispersibility" without including all the "solvents with poor dispersibility" is created in the three-dimensional space. Then, $\delta_d$, $\delta_p$, and $\delta_h$ at the center of the true sphere can be obtained as $\delta_{d1}$, $\delta_{p1}$, and $d_n$; of the particles.

$\delta_{d1}$, $\delta_{p1}$, and $\delta_{h1}$ are changed in accordance with the type of material, the particle size, the particle size distribution (the coefficient of variation of the particle size), the details of a surface treatment (such as the type of surface treatment agent, the used amount of the surface treatment agent, or a surface treatment method), and the like of the particles. For example, there is a tendency that, as the particle size increases, $\delta_{d1}$ increases, and $\delta_{p1}$ and $\delta_{h1}$ decrease. In addition, there is a tendency that, as the coefficient of variation of the particle size increases, $\delta_{p1}$ increases, and $\delta_{h1}$ decreases. $\delta_{d1}$, $\delta_{p1}$, and $\delta_{h1}$ of the particles after the surface treatment are targeted at all the particles after the surface treatment considering the influence of the surface treatment. As $\delta_{d1}$, $\delta_{p1}$, and $\delta_{h1}$, numerical values at 25°C can be used.

$\delta_{d2}$, $\delta_{p2}$, and $\delta_{h2}$ of the liquid medium can be calculated on the basis of the composition of the liquid medium in the particle dispersion. In a case where the liquid medium is a mixture of a plurality of dispersion media, $\delta_{d2}$, $\delta_{p2}$, and $\delta_{h2}$ of the liquid medium can be calculated as the total value of the product of a parameter ($\delta_d$, $\delta_p$, or $\delta_h$) for each of the dispersion media and a volume ratio of each of the dispersion media with respect to the entire mixture. As $\delta_d$, $\delta_p$, and $\delta_h$ of each of the dispersion media constituting the liquid medium, numerical values in a database of analysis software HSPiP (Hansen Solubility Parameter in Practice; written by Prof. Steven Abbott and Dr. Yamamoto Hiroshi) can be used. Parameters ($\delta_d$, $\delta_p$, and $\delta_h$) for the component that are not registered in the database may be calculated by using structure analysis software called SMILES. As $\delta_{d2}$, $\delta_{p2}$, and $\delta_{h2}$, numerical values at 25°C can be used.

The present inventors have found that adjusting an HSP distance of particles with respect to a liquid medium is effective in adjusting a viscosity ratio of a particle dispersion with respect to the liquid medium, and have also found that reducing the HSP distance of the particles with respect to the liquid medium is effective in reducing the viscosity ratio of the particle dispersion with respect to the liquid medium. In the particle dispersion of the present embodiment, since the HSP distance of the particles with respect to the liquid medium is 15.0 MPa$^{0.5}$ or less, the viscosity ratio of the particle dispersion with respect to the liquid medium can be reduced. Regarding factors by which such a tendency is obtained, it is presumed that, when the HSP distance is within the above range, dispersibility of the particles with respect to the liquid medium is enhanced, such that a distance between the particles becomes large, interactions between the particles are weakened, and thus, a viscosity ratio of a particle dispersion with respect to the liquid medium can be reduced. However, factors by which the above tendency is obtained are not limited to the contents described above.

The HSP distance (unit: $MPa^{0.5}$) of the particles with respect to the liquid medium may be in the following range. From the viewpoint of easily reducing the viscosity ratio, the HSP distance of the particles with respect to the liquid medium may be 14.8 or less, 14.6 or less, 14.5 or less, 14.4 or less, 14.2 or less, 14.0 or less, 13.8 or less, 13.6 or less, 13.5 or less, 13.4 or less, 13.2 or less, 13.0 or less, 12.5 or less, 12.0 or less, 11.8 or less, 11.6 or less, 11.5 or less, 11.4 or less, 11.2 or less, 11.0 or less, 10.8 or less, 10.6 or less, 10.5 or less, 10.4 or less, 10.2 or less, 10.0 or less, 9.8 or less, 9.5 or less, 9.0 or less, 8.5 or less, 8.2 or less, 8.0 or less, 7.5 or less, 7.0 or less, 6.5 or less, 6.0 or less, 5.5 or less, 5.0 or less, 4.8 or less, or 4.6 or less. From the viewpoint of adjusting the viscosity ratio, the HSP distance of the particles with respect to the liquid medium may be more than 0.0, 0.5 or more, 1.0 or more, 1.5 or more, 2.0 or more, 2.5 or more, 3.0 or more, 3.5 or more, 4.0 or more, 4.5 or more, 4.6 or more, 4.8 or more, 5.0 or more, 5.5 or more, more than 5.5, 6.0 or more, 6.5 or more, 7.0 or more, more than 7.1, 7.5 or more, 8.0 or more, 8.2 or more, 8.5 or more, 9.0 or more, 9.5 or more, 9.8 or more, 10.0 or more, 10.2 or more, 10.4 or more, 10.5 or more, 10.6 or more, 10.8 or more, 11.0 or more, 11.2 or more, 11.4 or more, 11.5 or more, 11.6 or more, 11.8 or more, 12.0 or more, 12.5 or more, 13.0 or more, 13.2 or more, 13.4 or more, 13.5 or more, 13.6 or more, 13.8 or more, 14.0 or more, 14.2 or more, 14.4 or more, 14.5 or more, or 14.6 or more. From these viewpoints, the HSP distance of the particles with respect to the liquid medium may be more than 0.0 and 15.0 or less, more than 0.0 and 12.0 or less, more than 0.0 and 10.0 or less, 7.5 to 15.0, 7.5 to 12.0, 7.5 to 10.0, 9.0 to 15.0, 9.0 to 12.0, or 9.0 to 10.0.

In the particle dispersion of the present embodiment, at least a part of the particles may be dispersed in the liquid medium. The particles constitute the solid in the particle dispersion. The particles may include inorganic particles and may include organic particles.

Examples of the constituent material of the inorganic particles include an oxide such as silica, ceria, alumina, titania, zirconia, magnesia, yttria, zinc oxide, and iron oxide; a nitride such as silicon nitride, titanium nitride, and boron nitride; a hydroxide such as cerium hydroxide; a metal material such as copper, nickel, gold, silver, tin, zinc, platinum, bismuth, indium, and antimony; silicon carbide; calcium carbonate; aluminum sulfate; barium sulfate; potassium titanate; barium titanate; and calcium titanate. The inorganic particles may be produced by a melting method, a sol-gel method, a liquid phase method, or the like. As the constituent material of the organic particles, a resin material can be used, and examples thereof include an acrylic resin, a styrene resin, a urea resin, a phenol resin, an epoxy resin, and a benzoguanamine resin. The constituent materials of the particles can be used singly or in combinations of two or more kinds. From the viewpoint of easily reducing the viscosity ratio and from the viewpoint of easily obtaining excellent dispersibility of the particles, the particles may include inorganic particles, may contain a non-metal material, may contain at least one type selected from the group consisting of silica, ceria, alumina, titania, boron nitride, and calcium titanate, may contain at least one type selected from the group consisting of silica and alumina, and may contain silica.

The particles may be subjected to a surface treatment, and may not be subjected to the surface treatment. The particles subjected to the surface treatment may have a surface treatment agent on the surfaces of the particles. A surface treatment method may be a dry treatment, and may be a wet treatment.

Examples of the surface treatment agent include a silane compound (for example, a silane coupling agent), a titanium compound (for example, a titanium coupling agent), and an aluminate compound (for example, an aluminate coupling agent). The surface treatment agent may have an alkoxy group, an alkoxysilyl group, a phenyl group, a vinyl group, an epoxy group, an acryloyl group, a methacryloyl group, an amino group, a ureido group, a mercapto group, an isocyanate group, or the like. From the viewpoint of easily obtaining excellent dispersibility of the particles, the surface treatment agent may include a silane compound, and may include a silane compound having an alkoxysilyl group.

From the viewpoint of easily obtaining excellent dispersibility of the particles, as the silane compound having an alkoxysilyl group, the silane compound may include a silane compound having an alkoxy group bound to a silicon atom. In this silane compound, the number of alkoxy groups bound to the silicon atom may be 1 to 4, 1 to 3, 2 to 3, or 3 to 4 from the viewpoint of easily obtaining excellent dispersibility of the particles.

The silane compound may include a silane compound having a nitrogen-containing organic group from the viewpoint of easily obtaining excellent dispersibility of the particles. Examples of the nitrogen-containing organic group include an alkylamino group, an alkylaminoalkyl group, an arylamino group, an arylaminoalkyl group, a heteroarylamino group, and a heteroarylaminoalkyl group. From the viewpoint of easily obtaining excellent dispersibility of the particles, the nitrogen-containing organic group may include an arylaminoalkyl group, may include a phenylaminoalkyl group, and may include a phenylaminopropyl group.

Examples of the silane compound include N-phenyl-3-aminopropyltrimethoxysilane, phenyltrimethoxysilane, vinyltrimethoxysilane, epoxytrimethoxysilane, methacryltrimethoxysilane, aminotrimethoxysilane, ureidotrimethoxysilane, mercaptopropyltrimethoxysilane, isocyanatopropyltrimethoxysilane, phenylaminotrimethoxysilane, acryltrimethoxysilane, p-styryltrimethoxysilane, 3-acryloxypropyltrimethoxysilane, 3-methacryloxypropyltrimethoxysilane, 3-isocyanatopropyltrimethoxysilane, and 3-aminopropyltrimethoxysilane. The silane compound may include N-phenyl-3-aminopropyltrimethoxysilane from the viewpoint of easily obtaining excellent dispersibility of the particles.

The content of the surface treatment agent may be in the following range with respect to 100 parts by mass of the particles (not including the content of the surface treatment agent) from the viewpoint of easily obtaining excellent dispersibility of the particles. The content of the surface treatment agent may be 0.01 parts by mass or more, 0.05 parts by mass or more, 0.1 parts by mass or more, 0.3 parts by mass or more, or 0.5 parts by mass or more. The content of the surface treatment agent may be 10 parts by mass or less, 8.0 parts by mass or less, 5.0 parts by mass or less, 3.0 parts by mass or less, 2.0 parts by mass or less, 1.5 parts by mass or less, 1.0 parts by mass or less, 0.8 parts by mass or less, or 0.5 parts by mass or less. From these viewpoints, the content of the surface treatment agent may be 0.01 to 10 parts by mass, 0.05 to 5.0 parts by mass, or 0.1 to 2.0 parts by mass.

The specific weight (unit: $g/cm^3$) of the particles may be in the following range from the viewpoint of adjusting the viscosity ratio or the dispersibility of the particles. The specific weight of the particles may be 0.1 or more, 0.5 or more, 1.0 or more, 1.5 or more, or 2.0 or more. The specific weight of the particles may be 8.0 or less, 7.0 or less, 6.0 or less, 5.0 or less, 4.0 or less, 3.0 or less, or 2.5 or less. From these viewpoints, the specific weight of the particles may be 0.1 to 8.0, 1.0 to 8.0, or 1.0 to 5.0.

$\delta_{d1}$ (unit: $MPa^{0.5}$) of the particles may be in the following range from the viewpoint of adjusting the viscosity ratio or the dispersibility of the particles. $\delta_{d1}$ of the particles may be 8.0 or more, 9.0 or more, 10.0 or more, 10.5 or more, 11.0 or more, 11.5 or more, 12.0 or more, 12.5 or more, or 13.0 or more. $\delta_{d1}$ of the particles may be 25.0 or less, 22.0 or less, 20.0 or less, 19.5 or less, 19.0 or less, 18.5 or less, 18.0 or less, 17.5 or less, 17.0 or less, 16.5 or less, 16.0 or less, 15.5 or less, 15.0 or less, 14.5 or less, 14.0 or less, or 13.5 or less. From these viewpoints, $\delta_{d1}$ of the particles may be 8.0 to 25.0, 8.0 to 20.0, 8.0 to 15.0, 10.0 to 25.0, 10.0 to 20.0, 10.0 to 15.0, 12.0 to 25.0, 12.0 to 20.0, or 12.0 to 15.0.

$\delta_{p1}$ (unit: $MPa^{0.5}$) of the particles may be in the following range from the viewpoint of adjusting the viscosity ratio or the dispersibility of the particles. $\delta_{p1}$ of the particles may be 1.0 or more, 2.0 or more, 3.0 or more, 4.0 or more, 5.0 or more, 6.0 or more, 7.0 or more, 7.5 or more, 8.0 or more, 8.5 or more, 9.0 or more, 9.5 or more, 10.0 or more, 10.5 or more, 11.0 or more, or 11.5 or more. $\delta_{p1}$ of the particles may be 20.0 or less, 18.0 or less, 16.0 or less, 15.0 or less, 14.5 or less, 14.0 or less, 13.5 or less, 13.0 or less, 12.5 or less, or 12.0 or less. From these viewpoints, $\delta_{p1}$ of the particles may be 1.0 to 20.0, 1.0 to 15.0, 1.0 to 12.0, 8.0 to 20.0, 8.0 to 15.0, 8.0 to 12.0, 10.0 to 20.0, 10.0 to 15.0, or 10.0 to 12.0.

$\delta_{h1}$ (unit: $MPa^{0.5}$) of the particles may be in the following range from the viewpoint of adjusting the viscosity ratio or the dispersibility of the particles. $\delta_{h1}$ of the particles may be 1.0 or more, 2.0 or more, 3.0 or more, 4.0 or more, 5.0 or more, 6.0 or more, 7.0 or more, 8.0 or more, 8.5 or more, 9.0 or more, 9.5 or more, 10.0 or more, 10.5 or more, 11.0 or more, 11.5 or more, 12.0 or more, 12.5 or more, or 13.0 or more. $\delta_{h1}$ of the particles may be 20.0 or less, 19.0 or less, 18.0 or less, 17.0 or less, 16.0 or less, 15.5 or less, 15.0 or less, 14.5 or less, 14.0 or less, or 13.5 or less. From these viewpoints, $\delta_{h1}$ of the particles may be 1.0 to 20.0, 1.0 to 18.0, 1.0 to 15.0, 8.0 to 20.0, 8.0 to 18.0, 8.0 to 15.0, 10.0 to 20.0, 10.0 to 18.0, or 10.0 to 15.0.

From the viewpoint of easily reducing the viscosity ratio and from the viewpoint of easily obtaining excellent dispersibility of the particles, the content of the inorganic particles (not including the content of the surface treatment agent in a case where the inorganic particles are subjected to the surface treatment) may be 50% by mass or more, more than 50% by mass, 70% by mass or more, 80% by mass or more, 90% by mass or more, 92% by mass or more, 95% by mass or more, 97% by mass or more, 98% by mass or more, 99% by mass or more, or substantially 100% by mass, on the basis of the total mass of the particles (the total amount of the particles contained in the particle dispersion: not including the content of the surface treatment agent in a case where the particles are subjected to the surface treatment).

As the content of the particles (including the content of the surface treatment agent in a case where the particles are subjected to the surface treatment), the content of the particles (not including the content of the surface treatment agent in a case where the particles are subjected to the surface treatment), the content of the inorganic particles (including the content of the surface treatment agent in a case where the particles are subjected to the surface treatment), or the content of the inorganic particles (not including the content of the surface treatment agent in a case where the particles are subjected to the surface treatment), a content A1 may be in the following range on the basis of the total mass of the particle dispersion from the viewpoint of adjusting the viscosity ratio or the dispersibility of the particles. The content A1 may be 0.1% by mass or more, 0.5% by mass or more, 1% by mass or more, 5% by mass or more, 10% by mass or more, 15% by mass or more, 20% by mass or more, 25% by mass or more, 30% by mass or more, 35% by mass or more, 40% by mass or more, 45% by mass or more, 50% by mass or more, 55% by mass or more, 60% by mass or more, 65% by mass or more, or 70% by mass or more. The content A1 may be 99% by mass or less, 95% by mass or less, 90% by mass or less, 85% by mass or less, 80% by mass or less, 75% by mass or less, or 70% by mass or less. From these viewpoints, the content A1 may be 0.1 to 99% by mass, 0.1 to 90% by mass, 0.1 to 80% by mass, 5 to 99% by mass, 5 to 90% by mass, 5 to 80% by mass, 30 to 99% by mass, 30 to 90% by mass, or 30 to 80% by mass.

Examples of the liquid medium (the dispersion medium constituting the liquid medium) include an organic solvent, water, and a resin material (for example, a resin material that is liquid at 25°C). The organic solvent is an all-inclusive term for organic compounds having a property of dissolving other substances, and is widely used in coating, washing, printing, or the like. The organic solvent may be liquid at 25°C. In the particle dispersion of the present embodiment, only one type among the organic solvent, water, and the resin material may be used, and at least two types among the organic solvent, water, and the resin material may be used together. Each of organic solvents and resin materials can be used singly or in combinations of two or more kinds.

Examples of the organic solvent include a ketone-based compound (excluding a compound corresponding to an alcohol) such as methyl isobutyl ketone (MIBK), methyl ethyl ketone (MEK), diisobutyl ketone, acetone, cyclohexanone, acetophenone, and benzophenone; an aromatic hydrocarbon-based compound such as benzene, toluene, xylene, styrene, and diethylbenzene; an aliphatic hydrocarbon-based compound such as pentane, hexane, heptane, octane, nonane, and decane; an alicyclic hydrocarbon-based compound such as cyclohexane, methylcyclohexane, and decahydronaphthalene; a chlorinated hydrocarbon-based compound such as chlorobenzene, dichlorobenzene, trichlorobenzene, methylene chloride, chloroform, carbon tetrachloride, and tetrachloroethylene; alcohol such as methanol, ethanol, 1-propanol (n-propyl alcohol), 2-propanol (isopropyl alcohol), propylene glycol 1-monomethyl ether, 1-butanol, 2-butanol, t-butanol, 1-pentanol, 2-pentanol, 3-pentanol, diacetone alcohol, 1-hexanol, 2-ethyl-1-hexanol, cyclohexanol, and benzyl alcohol; a phenolic compound such as cresol; an ether-based compound (excluding a compound corresponding to an alcohol) such as dibenzyl ether, ethyl ether, ethylene glycol monomethyl ether, diethylene glycol monobutyl ether, anisole, phenyl ether, dioxane, and tetrahydrofuran; an ester-based compound such as ethyl acetate, butyl acetate, benzyl acetate, ethyl benzoate, benzyl benzoate, and $\gamma$-butyrolactone; a nitrile-based compound such as acetonitrile; a sulfoxide compound such as dimethyl sulfoxide, diethyl sulfoxide, dipropyl sulfoxide, and diphenyl sulfoxide; an amide-based compound such as formamide, N,N-dimethylacetamide, 1-methyl-2-pyrrolidone, and N-methyl-2-pyrrolidone; a carbonate-based compound such as ethylene carbonate and propylene carbonate; and an acid anhydride such as acetic anhydride. From the viewpoint of easily reducing the viscosity ratio and from the viewpoint of easily obtaining excellent dispersibility of the particles, the liquid medium may include an organic solvent, may include at least one type selected from the group consisting of methyl isobutyl ketone, methyl ethyl ketone, and toluene, may include methyl isobutyl ketone, and may include methyl ethyl ketone.

The liquid medium may include a hydrophobic organic solvent, and may include a plurality of hydrophobic organic solvents. As the hydrophobic organic solvent, a solvent of which the degree of solubility to water at 25°C is 1 g/100 mL or less may be used.

In a case where the liquid medium includes an organic solvent, from the viewpoint of easily reducing the viscosity ratio and from the viewpoint of easily obtaining excellent dispersibility of the particles, the content of the organic solvent may be 20% by mass or more, 30% by mass or more, 50% by mass or more, more than 50% by mass, 70% by mass or more, 80% by mass or more, 90% by mass or more, 92% by mass or more, 95% by mass or more, 97% by mass or more, 98% by mass or more, 99% by mass or more, or substantially 100% by mass, on the basis of the total mass of the liquid medium (the total amount of the liquid medium contained in the particle dispersion).

$\delta_{d2}$, $\delta_{p2}$, or $\delta_{h2}$ (unit: $MPa^{0.5}$) of the liquid medium in the particle dispersion may be in the following range from the viewpoint of adjusting the viscosity ratio. As $\delta_{d2}$, $\delta_{p2}$, or $\delta_{h2}$ of the liquid medium in the particle dispersion, when the liquid medium is composed of a single dispersion medium, $\delta_{d2}$, $\delta_{p2}$, or $\delta_{h2}$ of the dispersion medium is targeted, and when the liquid medium contains a plurality of dispersion media, $\delta_{d2}$, $\delta_{p2}$, or $\delta_{h2}$ of the mixture of all the dispersion media contained in the particle dispersion is targeted.

$\delta_{d2}$ of the liquid medium may be 10.0 or more, 11.0 or more, 12.0 or more, 13.0 or more, 14.0 or more, 14.5 or more, 15.0 or more, 15.5 or more, 16.0 or more, 16.5 or more, 17.0 or more, 17.5 or more, 18.0 or more, or 18.5 or more. $\delta_{d2}$ of the liquid medium may be 25.0 or less, 22.0 or less, 20.0 or less, 19.5 or less, 19.0 or less, 18.5 or less, 18.0 or less, 17.5 or less, 17.0 or less, 16.5 or less, 16.0 or less, 15.5 or less, or 15.0 or less. From these viewpoints, $\delta_{d2}$ of the liquid medium may be 10.0 to 25.0, 10.0 to 20.0, 10.0 to 17.0, 12.0 to 25.0, 12.0 to 20.0, 12.0 to 17.0, 15.0 to 25.0, 15.0 to 20.0, or 15.0 to 17.0.

$\delta_{p2}$ of the liquid medium may be 1.0 or more, 2.0 or more, 3.0 or more, 4.0 or more, 5.0 or more, 5.5 or more, 6.0 or more, 6.5 or more, 7.0 or more, 7.5 or more, 8.0 or more, 8.5 or more, 9.0 or more, 10.0 or more, 11.0 or more, 12.0 or more, 13.0 or more, 14.0 or more, 15.0 or more, 16.0 or more, 17.0 or more, or 18.0 or more. $\delta_{p2}$ of the liquid medium may be 20.0 or less, 19.0 or less, 18.0 or less, 17.0 or less, 16.0 or less, 15.0 or less, 14.0 or less, 13.0 or less, 12.0 or less, 11.0 or less, 10.0 or less, 9.0 or less, 8.5 or less, 8.0 or less, 7.5 or less, 7.0 or less, 6.5 or less, 6.0 or less, 5.5 or less, 5.0 or less, 4.5 or less, 4.0 or less, 3.5 or less, 3.0 or less, 2.5 or less, 2.0 or less, or 1.5 or less. From these viewpoints, $\delta_{p2}$ of the liquid medium may be 1.0 to 20.0, 1.0 to 15.0, 1.0 to 10.0, 3.0 to 20.0, 3.0 to 15.0, 3.0 to 10.0, 6.0 to 20.0, 6.0 to 15.0, or 6.0 to 10.0.

$\delta_{h2}$ of the liquid medium may be 1.0 or more, 2.0 or more, 3.0 or more, 4.0 or more, 5.0 or more, 5.5 or more, 6.0 or more, 6.5 or more, 7.0 or more, 7.5 or more, 8.0 or more, 8.5 or more, 9.0 or more, 10.0 or more, 11.0 or more, 12.0 or more, 13.0 or more, 14.0 or more, 15.0 or more, 16.0 or more, 17.0 or more, 18.0 or more, 19.0 or more, 20.0 or more, 21.0 or more, or 22.0 or more. $\delta_{h2}$ of the liquid medium may be 23.0 or less, 22.0 or less, 21.0 or less, 20.0 or less, 19.0 or less, 18.0 or less, 17.0 or less, 16.0 or less, 15.0 or less, 14.0 or less, 13.0 or less, 12.0 or less, 11.0 or less, 10.0 or less, 9.0 or less, 8.5 or less, 8.0 or less, 7.5 or less, 7.0 or less, 6.5 or less, 6.0 or less, 5.5 or less, 5.0 or less, 4.5 or less, 4.0 or less, 3.5 or less, 3.0 or less, 2.5 or less, or 2.0 or less. From these viewpoints, $\delta_{h2}$ of the liquid medium may be 1.0 to 23.0, 1.0 to 15.0, 1.0 to 6.0, 3.0 to 23.0, 3.0 to 15.0, 3.0 to 6.0, 4.0 to 23.0, 4.0 to 15.0, or 4.0 to 6.0.

The present inventors have found that, when the liquid medium includes a first dispersion medium and a second dispersion medium as a plurality of dispersion media, adjusting a distance of an HSP value of the second dispersion medium with respect to an HSP value of the first dispersion medium (HSP distance between the dispersion media: hereinafter, referred to as "the HSP distance of the second dispersion medium with respect to the first dispersion medium" in some cases) is effective for adjusting the viscosity ratio of the particle dispersion with respect to the liquid medium, and that the viscosity ratio tends to be more easily reduced when the HSP distance of the second dispersion medium with respect to the first dispersion medium is small. The HSP distance of the second dispersion medium with respect to the first dispersion medium can be calculated from the formula below. $\delta_{d21}$, $\delta_{p21}$, and $\delta_{h21}$ are $\delta_d$, $\delta_p$, and $\delta_h$ of the first dispersion medium, and $\delta_{d22}$, $\delta_{p22}$, and $\delta_{h22}$ are $\delta_d$, $\delta_p$, and $\delta_h$ of the second dispersion medium.

$$\text{HSP Distance} = \{4 \times (\delta_{d21} - \delta_{d22})^2 + (\delta_{p21} - \delta_{p22})^2 + (\delta_{h21} - \delta_{h22})^2\}^{0.5}$$

The HSP distance (unit: $MPa^{0.5}$) of the second dispersion medium with respect to the first dispersion medium may be in the following range. From the viewpoint of easily reducing the viscosity ratio, the HSP distance of the second dispersion medium with respect to the first dispersion medium may be 18.0 or less, 17.5 or less, 17.0 or less, 16.5 or less, 16.0 or less, 15.5 or less, 15.0 or less, 14.5 or less, 14.0 or less, 13.5 or less, 13.0 or less, 12.5 or less, 12.0 or less, 11.5 or less, 11.0 or less, 10.5 or less, 10.0 or less, 9.5 or less, 9.0 or less, 8.5 or less, 8.0 or less, 7.5 or less, 7.0 or less, 6.5 or less, 6.0 or less, or 5.5 or less. From the viewpoint of adjusting the viscosity ratio, the HSP distance of the second dispersion medium with respect to the first dispersion medium may be more than 0.0, 1.0 or more, 2.0 or more, 3.0 or more, 4.0 or more, 5.0 or more, 5.5 or more, 6.0 or more, 6.5 or more, 7.0 or more, 7.5 or more, 8.0 or more, 8.5 or more, 9.0 or more, 9.5 or more, 10.0 or more, 10.5 or more, 11.0 or more, 11.5 or more, 12.0 or more, 12.5 or more, 13.0 or more, 13.5 or more, 14.0 or more, 14.5 or more, 15.0 or more, 15.5 or more, 16.0 or more, 16.5 or more, 17.0 or more, or 17.5 or more. From these viewpoints, the HSP distance of the second dispersion medium with respect to the first dispersion medium may be more than 0.0 and 18.0 or less, more than 0.0 and 15.0 or less, more than 0.0 and 10.0 or less, 5.0 to 18.0, 5.0 to 15.0, 5.0 to 10.0, 7.0 to 18.0, 7.0 to 15.0, or 7.0 to 10.0. The particle dispersion may contain three or more dispersion media, and may contain, for example, another dispersion medium in addition to the first dispersion medium and the second dispersion medium having the HSP distance in the above range.

From the viewpoint of adjusting the viscosity ratio, the content of the liquid medium may be within the following range with respect to 100 parts by mass of the particles (including the content of the surface treatment agent in the case where the particles are subjected to the surface treatment) or with respect to 100 parts by mass of the particles (not including the content of the surface treatment agent in the case where the particles are subjected to the surface treatment). The content of the liquid medium may be 10 parts by mass or more, 15 parts by mass or more, 20 parts by mass or more, 25 parts by mass or more, 30 parts by mass or more, 35 parts by mass or more, 40 parts by mass or more, 45 parts by mass or more, 50 parts by mass or more, 60 parts by mass or more, 80 parts by mass or more, or 100 parts by mass or more. The content of the liquid medium may be 200 parts by mass or less, 150 parts by mass or less, 120 parts by mass or less, 100 parts by mass or less, less than 100 parts by mass, 80 parts by mass or less, 60 parts by mass or less, 50 parts by mass or less, or 45 parts by mass or less. From these viewpoints, the content of the liquid medium may be 10 to 200 parts by mass, 20 to 120 parts by mass, or 30 to 60 parts by mass.

From the viewpoint of adjusting the viscosity ratio, the content of the liquid medium may be within the following range on the basis of the total mass of the particle dispersion. The content of the liquid medium may be 1% by mass or more, 5% by mass or more, 10% by mass or more, 15% by mass or more, 20% by mass or more, 25% by mass or more, 30% by mass or more, 35% by mass or more, 40% by mass or more, or 45% by mass or more. The content of the liquid medium may be 99.9% by mass or less, 99.5% by mass or less, 99% by mass or less, 95% by mass or less, 90% by mass or less, 85% by mass or less, 80% by mass or less, 75% by mass or less, 70% by mass or less, 65% by mass or less, 60% by mass or less, 55% by mass or less, 50% by mass or less, 45% by mass or less, 40% by mass or less, 35% by mass or less, or 30% by mass or less. From these viewpoints, the content of the liquid medium may be 1 to 99.9% by mass, 5 to 80% by mass, or 10 to 70% by mass.

The total amount of the particles and the liquid medium (including the content of the surface treatment agent when the particles are subjected to the surface treatment), the total amount of the particles and the liquid medium (not including the content of the surface treatment agent when the particles are subjected to the surface treatment), the total amount of the inorganic particles and the liquid medium (including the content of the surface treatment agent when the inorganic particles are subjected to the surface treatment), or the total amount of the inorganic particles and the liquid medium (not including the content of the surface treatment agent when the inorganic particles are subjected to the surface treatment) may be 50% by mass or more, more than 50% by mass, 70% by mass or more, 80% by mass or more, 90% by mass or more, 92% by mass or more, 95% by mass or more, 97% by mass or more, 98% by mass or more, 99% by mass or more, or substantially 100% by mass, on the basis of the total mass of the particle dispersion, from the viewpoint of adjusting the viscosity ratio.

The particle dispersion of the present embodiment may contain a component (excluding the surface treatment agent for the particles) other than the particles and the liquid medium. As such a component, for example, a component to be dissolved in the liquid medium can be used. Examples of the component other than the particles and the liquid medium include a resin material that is not liquid at 25°C.

A viscosity V1 (unit: mPa·s) of the particle dispersion at 25°C and a shear rate of 1 min$^{-1}$ may be in the following range. The viscosity V1 may be 100 or more, 200 or more, 300 or more, 400 or more, 500 or more, 600 or more, 700 or more, 800 or more, 900 or more, 1000 or more, 2000 or more, 3000 or more, 4000 or more, 5000 or more, 8000 or more, or 10000 or more. The viscosity V1 may be 15000 or less, 12000 or less, 10000 or less, 8000 or less, 5000 or less, 4000 or less, 3000 or less, 2000 or less, 1000 or less, 900 or less, 800 or less, 700 or less, 600 or less, 500 or less, 400 or less, or 300 or less. From these viewpoints, the viscosity V1 may be 100 to 15000, 150 to 5000, or 200 to 800.

A method for producing a particle dispersion of the present embodiment includes a mixing step of mixing particles and a liquid medium with each other. The method for producing a particle dispersion of the present embodiment may be an embodiment including a selecting step of selecting particles and a liquid medium based on an HSP distance of the particles with respect to the liquid medium, and a mixing step of mixing the particles and the liquid medium (the particles and the liquid medium selected in the selecting step) with each other. In such an embodiment, a viscosity ratio of the particle dispersion with respect to the liquid medium can be adjusted by selecting particles and a liquid medium based on an HSP distance of the particles with respect to the liquid medium, and a viscosity ratio of the particle dispersion with respect to the liquid medium can be reduced by selecting particles and a liquid medium in which an HSP distance of the particles with respect to the liquid medium is 15.0 MPa$^{0.5}$ or less. In the selecting step, the particles may be selected based on the type of material, the particle size, the particle size distribution (the coefficient of variation of the particle size), the details of a surface treatment (such as the type of surface treatment agent, the used amount of the surface treatment agent, or a surface treatment method), or the like, and the liquid medium may be selected based on the type of the material of the dispersion medium constituting the liquid medium, the content of the dispersion medium, or the like.

A method for adjusting a viscosity of the present embodiment includes an adjusting step of adjusting a relative relationship between a viscosity of a particle dispersion containing particles and a liquid medium and a viscosity of the liquid medium based on an HSP distance of the particles with respect to the liquid medium. In the adjusting step, a viscosity ratio of the particle dispersion with respect to the liquid medium may be adjusted. In the adjusting step, the viscosity ratio of the particle dispersion with respect to the liquid medium can be reduced by adjusting the HSP distance of the particles with respect to the liquid medium to 15.0 MPa$^{0.5}$ or less.

**Examples**

Hereinafter, the present disclosure will be described in more detail by Examples. However, the present disclosure is not limited to such Examples.

<Preparation of Materials Used>

(Particles)

Silica particles: manufactured by ADMATECHS COMPANY LIMITED, product name "SO-32R", particles produced by a melting method, particle size of 1.5 $\mu$m (D50) and 4.5 $\mu$m (D95), specific weight of 2.2 g/cm$^3$

Alumina particles: manufactured by Sumitomo Chemical Co., Ltd., product name "AA04 Alumina", particle size of 0.4 $\mu$m (D50) and 0.6 $\mu$m (D95), specific gravity of 3.9 g/cm$^3$

(Surface Treatment Agent)

Silane coupling agent: N-phenyl-3-aminopropyltrimethoxysilane, manufactured by Shin-Etsu Chemical Co., Ltd., product name "KBM-573"

(Liquid Medium)

Various dispersion media shown in Tables 1 to 3

<Preparation of Particle Dispersion>

(Examples A1 to A16 and Comparative Examples A1 to A6)

100 parts by mass of silica particles, 0.5 parts by mass of a silane coupling agent, $3.5 \times 10^{-2}$ parts by mass of pure water, and 42.8 parts by mass of the liquid medium (the single dispersion medium) shown in Table 1 were mixed in a beaker to obtain a mixed liquid. Next, the beaker with this mixed liquid was put in a water bath at 60°C, and then, a wet treatment was performed at a rotation frequency of 150 $min^{-1}$ for 1 hour using two agitating blades (made of Teflon) by a three-one motor to obtain a mixed liquid with a solid content of 70% by mass.

After that, by using Nano-Mizer device (manufactured by YOSHIDA KIKAI CO., LTD., product name "NM2-2000AR") and FILMIX device (manufactured by PRIMIX Corporation, product name "FM40-40L"), a dispersion treatment (Nano-Mizer treatment condition: passing through a nozzle three times; FILMIX treatment condition: 40 m/s, 1 minute) by cavitation was performed to prepare a particle dispersion with a solid content of 70% by mass.

The solid content described above of the particle dispersion was previously selected as the solid content of the particle dispersion in which the boundary state between the non-Bingham fluid and the dilatant fluid is achieved by confirming the behavior of the viscosity with respect to the rotation frequency of the E-type viscometer (manufactured by Toki Sangyo Co., Ltd., product names "TV-22 Type" and "TV-33 Type") while changing the solid content of the particle dispersion in increments of 5% by mass. The solid content of the following particle dispersion was also selected in advance.

(Examples B1 to B21 and Comparative Example B1)

A particle dispersion with a solid content of 70% by mass was prepared as with Example A1, except that 42.8 parts by mass of the liquid medium used was the liquid medium of Table 2 (a mixture of a plurality of dispersion media).

(Examples C1 to C11 and Comparative Example C1)

100 parts by mass of alumina particles, 0.5 parts by mass of a silane coupling agent, $3.5 \times 10^{-2}$ parts by mass of pure water, and 100 parts by mass of the liquid medium (the single dispersion medium) shown in Table 3 were mixed in a beaker to obtain a mixed liquid. Next, the beaker with this mixed liquid was put in a water bath at 60°C, and then, a wet treatment was performed at a rotation frequency of 150 $min^{-1}$ for 1 hour using two agitating blades (made of Teflon) by a three-one motor to obtain a mixed liquid with a solid content of 50% by mass.

After that, by using Nano-Mizer device (manufactured by YOSHIDA KIKAI CO., LTD., product name "NM2-2000AR") and FILMIX device (manufactured by PRIMIX Corporation, product name "FM40-40L"), a dispersion treatment (Nano-Mizer treatment condition: passing through a nozzle three times; FILMIX treatment condition: 40 m/s, 1 minute) by cavitation was performed to prepare a particle dispersion with a solid content of 50% by mass.

<HSP Value of Particles>

The particle dispersion described above was dried at 130°C for 1 hour to collect powdered particles. A particle size D50 (hereinafter, referred to as a "particle size A") and a particle size D100 of these particles were obtained on the basis of real image observation using a scanning electron microscopy (SEM).

Next, 0.02 g of these particles was put in each of 16 containers (screw bottles), and then, 20 mL of each of 16 types of organic solvents was put in each of the containers to prepare a test liquid (content of particles: approximately 0.1% by mass). As 16 types of organic solvents, methyl isobutyl ketone, toluene, methanol, cyclohexanol, acetone, acetonitrile, formamide, benzyl benzoate, dimethyl sulfoxide, ethyl acetate, ethanol, acetic anhydride, γ-butyrolactone, methyl ethyl ketone, 1-butanol, and cyclohexane were used. The test liquid described above was subjected to a dispersion treatment for 5 minutes by using an ultrasonic dispersing device (manufactured by AS ONE CORPORATION, product name "VS-D100"). Next, the particle size distribution (the cumulative particle size distribution, the volume distribution) of the particles in the test liquid was measured by using a particle size analyzer (manufactured by SHIMADZU CORPORATION, product name "SALD-7500"). For each case of using 16 types of organic solvents described above, on the basis of the measurement result of this particle size distribution, a particle size D50 (hereinafter, referred to as a "particle size B") was obtained. Note that the particle size distribution of standard particles (MBP1-10) having a specific particle size distribution was measured in advance, and the validity of the measurement contents was checked.

For each case of using 16 types of organic solvents described above, a coefficient of variation (CV) of the particle size was obtained on the basis of the measurement result of the particle size distribution described above. A case where the coefficient of variation is 20 or more was determined as being in a polydispersed state, and a case where the coefficient of variation is less than 20 was determined as being in a monodispersed state. For 16 types of organic solvents described above, whether the organic solvent is a "solvent with poor dispersibility" or a "solvent with excellent dispersibility" was determined on the basis of the following criteria.

For the criteria of the aggregation in the monodispersed state, a particle size twice the particle size A described above (assuming a particle size when two particles are in contact with each other) was adopted as a threshold value, an organic solvent in a case where the particle size B described above is greater than or equal to this threshold value was determined as the "solvent with poor dispersibility", and an organic solvent in a case where the particle size B described above is less than this threshold value was determined as the "solvent with excellent dispersibility".

On the other hand, for the criteria of the aggregation in the polydispersed state, since the distribution of the particle size is wide, from the viewpoint that it is desirable to set criteria easy to target aggregated particles, the particle size D100 described above was adopted as a threshold value, an organic solvent in a case where the particle size B described above is greater than or equal to this threshold value was determined as the "solvent with poor dispersibility", and an organic solvent in a case where the particle size B described above is less than this threshold value was determined as the "solvent with excellent dispersibility".

Next, 16 types of organic solvents described above were plotted in a three-dimensional space (a Hansen space) having $\delta_d$, $\delta_p$, and $\delta_h$ as coordinate axes by using analysis software HSPiP (Hansen Solubility Parameter in Practice; written by Prof. Steven Abbott and Dr. Yamamoto Hiroshi). As $\delta_d$, $\delta_p$, and $\delta_h$ of each of the organic solvents, numerical values in a database of the analysis software described above were used.

Subsequently, a virtual true sphere including all the "solvents with excellent dispersibility" described above without including all the "solvents with poor dispersibility" described above was created in the three-dimensional space described above. Then, $\delta_d$, $\delta_p$, and $\delta_h$ at the center of this true sphere were obtained as $\delta_{d1}$, $\delta_{p1}$, and $\delta_{h1}$ of the particles. In the silica particles, $\delta_{d1} = 13.4$ MPa$^{0.5}$, $\delta_{p1} = 11.7$ MPa$^{0.5}$, and $\delta_{h1} = 13.1$ MPa$^{0.5}$. In the alumina particles, $\delta_{d1} = 17.1$ MPa$^{0.5}$, $\delta_{p1} = 10.3$ MPa$^{0.5}$, and $\delta_{h1} = 12.7$ MPa$^{0.5}$.

<HSP Value of Liquid Medium>

As $\delta_d$, $\delta_p$, and $\delta_h$ of the liquid medium, numerical values in a database of analysis software HSPiP (Hansen Solubility Parameter in Practice; written by Prof. Steven Abbott and Dr. Yamamoto Hiroshi) were used. As $\delta_{d2(mix)}$, $\delta_{p2(mix)}$, and $\delta_{h2(mix)}$ of the liquid medium, which was a mixture of a plurality of dispersion media, the total value of the product of a parameter ($\delta_d$, $\delta_p$, or $\delta_h$) for each of the dispersion media and a volume ratio of each of the dispersion media was used. $\delta_{d2}$, $\delta_{p2}$, and $\delta_{h2}$ of the liquid medium in Examples and Comparative Examples are shown in Tables 1 to 3. Since the used amount of the pure water mixed together with the silane coupling agent was small, the influence of this pure water was not considered.

<Calculation of HSP Distance>

The HSP distance of the particles with respect to the liquid medium was calculated from the formula below on the basis of $\delta_{d1}$, $\delta_{p1}$, and $\delta_{h1}$ of the particles and $\delta_{d2}$, $\delta_{p2}$, and $\delta_{h2}$ of the liquid medium. The HSP distance (particles/liquid medium) is shown in Tables 1 to 3.

$$\text{HSP Distance} = \{4 \times (\delta_{d1} - \delta_{d2})^2 + (\delta_{p1} - \delta_{p2})^2 + (\delta_{h1} - \delta_{h2})^2\}^{0.5}$$

In the case where the liquid medium is a mixture of a plurality of dispersion media, the HSP distance between the dispersion media was calculated from the formula below on the basis of $\delta_{d21}$, $\delta_{p21}$, and $\delta_{h21}$ of the first dispersion medium and $\delta_{d22}$, $\delta_{p22}$, and $\delta_{h22}$ of the second dispersion medium. The HSP distance (dispersion medium 1/dispersion medium 2) is shown in Table 2.

$$\text{HSP Distance} = \{4 \times (\delta_{d21} - \delta_{d22})^2 + (\delta_{p21} - \delta_{p22})^2 + (\delta_{h21} - \delta_{h22})^2\}^{0.5}$$

<Measurement of Viscosity>

Using an E-type viscometer (manufactured by Toki Sangyo Co., Ltd., product names "TV-22 Type" and "TV-33 Type"), a viscosity A of the particle dispersion described above at 25°C and a shear rate of 1 min$^{-1}$ was measured. Since the upper limit of the viscosity that can be measured using the TV-22 Type viscometer is 14650 mPa·s, the viscosity A of 14650 mPa·s or less was measured using the TV-22 Type viscometer, and the viscosity A exceeding 14650 mPa·s was measured using the TV-33 Type viscometer (upper limit of measurable viscosity: 1000 Pa·s). In the case of the TV-33 Type viscometer, due to the design of the apparatus, when the viscosity of the same liquid is measured using both the TV-22 Type viscometer and the TV-33 Type viscometer, a measured value twice as large as that measured with the TV-22 Type viscometer tends to be obtained. Accordingly, from the viewpoint of using the measured value obtained with the TV-22 Type viscometer as a reference, a viscosity A was obtained by correcting the measured value obtained with the TV-33 Type viscometer to one half.

As a viscosity B of the liquid medium used in each particle dispersion (25°C, shear rate: 1 min$^{-1}$, in the case where the liquid medium contains a plurality of dispersion media, the viscosity of the mixture of all dispersion media contained in the particle dispersion), the viscosity (25°C, shear rate: 1 min$^{-1}$) listed in Compact Edition Solvent Pocketbook, 1st Edition, edited by the Society of Synthetic Organic Chemistry, Japan (1994), was used. The viscosity of the mixture of the dispersion media was calculated as the total value of the product of the viscosity of each dispersion medium and the volume ratio of each dispersion medium. The viscosity ratio (A/B) of the viscosity A with respect to the viscosity B is shown in Tables 1 to 3.

[Table 1]

| | | Liquid medium | | | | HSP distance (particles/liquid medium) | Viscosity | | Viscosity ratio [A/B] |
|---|---|---|---|---|---|---|---|---|---|
| | | Type | $\delta_{d2}$ | $\delta_{p2}$ | $\delta_{h2}$ | | Particle dispersion [A] | Liquid medium [B] | |
| | | - | MPa$^{0.5}$ | | | MPa$^{0.5}$ | mPa·s | | - |
| Example | A1 | Acetone | 15.5 | 10.4 | 7.0 | 7.5 | 388 | 0.30 | 1293 |
| | A2 | 2-Propanol | 15.8 | 6.1 | 16.4 | 8.1 | 5088 | 1.77 | 2875 |
| | A3 | 1-Butanol | 16.0 | 5.7 | 15.8 | 8.4 | 284 | 3.00 | 95 |
| | A4 | Methanol | 14.7 | 12.3 | 22.3 | 9.6 | 250 | 0.59 | 424 |
| | A5 | Methyl ethyl ketone | 16.0 | 9.0 | 5.1 | 9.9 | 281 | 0.38 | 739 |
| | A6 | Acetonitrile | 15.3 | 18.0 | 6.1 | 10.2 | 397 | 0.34 | 1168 |
| | A7 | Methyl isobutyl ketone | 15.3 | 6.1 | 4.1 | 11.3 | 299 | 0.61 | 490 |
| | A8 | Dimethyl sulfoxide | 18.4 | 16.4 | 10.2 | 11.4 | 266 | 2.00 | 133 |
| | A9 | Cresol | 18.5 | 6.5 | 13.7 | 11.5 | 10350 | 12.90 | 802 |
| | A10 | $\gamma$-Butyrolactone | 18.0 | 16.6 | 7.4 | 11.9 | 507 | 1.75 | 290 |
| | All | Cyclohexanone | 17.8 | 8.4 | 5.1 | 12.3 | 348 | 2.45 | 142 |
| | A12 | Ethyl benzoate | 17.9 | 6.2 | 6.0 | 12.7 | 2920 | 1.96 | 1493 |
| | A13 | Anisole | 17.8 | 4.4 | 6.9 | 13.0 | 2860 | 0.74 | 3860 |
| | A14 | Diisobutyl ketone | 16.0 | 3.7 | 4.1 | 13.1 | 2460 | 0.48 | 5146 |
| | A15 | Benzyl acetate | 18.3 | 5.7 | 6.0 | 13.5 | 3440 | 1.40 | 2459 |
| | A16 | Butyl acetate | 18.3 | 5.6 | 5.5 | 13.8 | 3620 | 0.98 | 3709 |
| Comparative Example | A1 | Dibenzyl ether | 19.6 | 3.4 | 5.2 | 16.9 | 36380 | 3.71 | 9806 |
| | A2 | Xylene | 17.8 | 1.0 | 3.1 | 17.1 | 7100 | 0.60 | 11774 |
| | A3 | Styrene | 18.6 | 1.0 | 4.1 | 17.4 | 9900 | 0.70 | 14224 |
| | A4 | Toluene | 18.0 | 1.4 | 2.0 | 17.7 | 8200 | 0.55 | 14909 |
| | A5 | Cyclohexane | 16.8 | 0.0 | 0.2 | 18.7 | 20550 | 0.90 | 22833 |
| | A6 | Diethylbenzene | 18.0 | 0.0 | 0.6 | 19.4 | 23150 | 0.59 | 39237 |

[Table 2]

| | | Liquid medium | | | | | | | | HSP distance | | Viscosity | | |
|---|---|---|---|---|---|---|---|---|---|---|---|---|---|---|
| | | Type | | Composition | | | | | | Particles/liquid medium | Dispersion medium 1/ dispersion medium 2 | Particle dispersion [A] | Liquid medium [B] | Viscosity ratio [A/B] |
| | | Dispersion medium 1 | Dispersion medium 2 | Dispersion medium 1 | Dispersion medium 2 | $\delta_{d2(mix)}$ | $\delta_{p2(mix)}$ | $\delta_{h2(mix)}$ | | | | | | |
| | | - | | vol% | | MPa$^{0.5}$ | | | | MPa$^{0.5}$ | | mPa·s | | - |
| Example | B1 | 2-Propanol | Acetonitrile | 57 | 43 | 15.6 | 11.2 | 12.0 | | 4.6 | 15.8 | 283 | 1.16 | 245 |
| | B2 | Ethanol | Acetonitrile | 49 | 51 | 15.5 | 13.5 | 12.6 | | 4.6 | 16.2 | 356 | 0.70 | 507 |
| | B3 | 1-Propanol | Acetonitrile | 55 | 45 | 15.7 | 11.8 | 12.3 | | 4.7 | 16.0 | 338 | 1.23 | 275 |
| | B4 | 1-Butanol | Acetonitrile | 58 | 42 | 15.7 | 10.9 | 11.7 | | 4.9 | 15.7 | 293 | 1.88 | 156 |
| | B5 | Methanol | Acetonitrile | 37 | 63 | 15.1 | 15.9 | 12.1 | | 5.5 | 17.2 | 336 | 0.43 | 777 |
| | B6 | Methanol | Methyl ethyl ketone | 27 | 73 | 15.6 | 9.9 | 9.7 | | 5.8 | 17.7 | 300 | 0.42 | 714 |
| | B7 | Diethylene glycol monobutyl ether | Acetonitrile | 66 | 34 | 15.8 | 9.5 | 10.2 | | 6.0 | 14.4 | 437 | 1.44 | 304 |
| | B8 | 1-Butanol | γ-Butγrolactone | 64 | 36 | 16.7 | 9.6 | 12.8 | | 6.9 | 14.3 | 318 | 2.55 | 125 |
| | B9 | 2-Propanol | Dimethyl sulfoxide | 66 | 34 | 16.7 | 9.6 | 14.3 | | 7.0 | 13.1 | 307 | 1.85 | 166 |
| | B10 | Acetone | Cyclohexanone | 58 | 42 | 16.5 | 9.6 | 6.2 | | 9.5 | 5.4 | 825 | 1.20 | 685 |
| | B11 | Diacetone alcohol | Cyclohexanone | 47 | 53 | 16.2 | 5.2 | 7.0 | | 10.5 | 7.0 | 394 | 0.39 | 999 |
| | B12 | Hexane | N,N-Dimethylacetamide | 43 | 57 | 16.0 | 6.6 | 5.4 | | 10.6 | 15.3 | 1138 | 0.23 | 4886 |
| | B13 | Propylene glycol 1-monomethyl ether | Toluene | 61 | 39 | 16.5 | 4.4 | 7.9 | | 10.9 | 11.8 | 1727 | 1.37 | 1257 |
| | B14 | Hexane | 1-Hexanol | 41 | 59 | 15.5 | 3.4 | 7.4 | | 10.9 | 13.9 | 13750 | 3.19 | 4305 |
| | B15 | Propylene glycol 1-monomethyl ether | Xylene | 59 | 41 | 16.5 | 4.1 | 8.1 | | 11.0 | 10.9 | 2520 | 1.37 | 1842 |
| | B16 | Methyl isobutyl ketone | Xylene | 48 | 52 | 16.6 | 3.4 | 3.6 | | 14.2 | 7.2 | 1580 | 0.61 | 2606 |
| | B17 | Methyl ethyl ketone | Xylene | 37 | 63 | 17.1 | 4.0 | 3.8 | | 14.2 | 9.0 | 2930 | 0.52 | 5629 |

(continued)

| | | Liquid medium | | | | | | | HSP distance | | Viscosity | | |
| | | Type | | Composition | | | | | | | | | Viscosity ratio [A/B] |
| | | Dispersion medium 1 | Dispersion medium 2 | Dispersion medium 1 | Dispersion medium 2 | $\delta_{d2(mix)}$ | $\delta_{p2(mix)}$ | $\delta_{h2(mix)}$ | Particles/liquid medium | Dispersion medium 1/ dispersion medium 2 | Particle dispersion [A] | Liquid medium [B] | |
| | | - | | vol% | | MPa$^{0.5}$ | | | MPa$^{0.5}$ | | mPa·s | | - |
| | B18 | Methyl isobutyl ketone | Toluene | 50 | 50 | 16.7 | 3.8 | 3.1 | 14.4 | 7.5 | 1550 | 0.58 | 2672 |
| | B19 | Cyclohexane | Methyl isobutyl ketone | 44 | 56 | 16.0 | 3.4 | 2.4 | 14.5 | 7.8 | 2900 | 0.74 | 3932 |
| | B20 | Methyl ethyl ketone | Toluene | 38 | 62 | 17.2 | 4.3 | 3.2 | 14.5 | 9.1 | 3290 | 0.49 | 6778 |
| | B21 | Diethylbenzene | Methyl isobutyl ketone | 42 | 58 | 16.4 | 3.5 | 2.6 | 14.6 | 8.9 | 1727 | 0.60 | 2871 |
| Comparative Example | B1 | Diethylbenzene | Acetonitrile | 75 | 25 | 17.3 | 4.5 | 2.0 | 15.4 | 19.6 | 218000 | 0.53 | 413270 |

EP 4 732 941 A1

14

[Table 3]

| | | Liquid medium | | | | HSP distance (particles/liquid medium) | Viscosity | | | Viscosity ratio [A/B] |
|---|---|---|---|---|---|---|---|---|---|---|
| | | Type | $\delta_{d2}$ | $\delta_{p2}$ | $\delta_{h2}$ | | Particle dispersion [A] | Liquid medium [B] | | |
| | | - | MPa$^{0.5}$ | | | MPa$^{0.5}$ | mPa·s | | | - |
| Example | C1 | Cresol | 18.5 | 6.5 | 13.7 | 4.8 | 1261 | 12.90 | | 98 |
| | C2 | 2-Propanol | 15.8 | 6.1 | 16.4 | 6.2 | 2140 | 1.77 | | 1209 |
| | C3 | Dimethyl sulfoxide | 18.4 | 16.4 | 10.2 | 7.1 | 248 | 2.00 | | 124 |
| | C4 | Cyclohexanone | 17.8 | 8.4 | 5.1 | 8.0 | 2839 | 2.45 | | 1159 |
| | C5 | Methyl ethyl ketone | 16.0 | 9.0 | 5.1 | 8.0 | 934 | 0.38 | | 2458 |
| | C6 | Benzyl acetate | 18.3 | 5.7 | 6.0 | 8.5 | 5410 | 1.40 | | 3864 |
| | C7 | Acetonitrile | 15.3 | 18.0 | 6.1 | 10.8 | 1248 | 0.34 | | 3671 |
| | C8 | Methanol | 14.7 | 12.3 | 22.3 | 10.9 | 2600 | 0.60 | | 4333 |
| | C9 | Diisobutyl ketone | 16.0 | 3.7 | 4.1 | 11.1 | 1348 | 0.48 | | 2808 |
| | C10 | Styrene | 18.6 | 1.0 | 4.1 | 13.0 | 4000 | 0.70 | | 5714 |
| | C11 | Toluene | 18.0 | 1.4 | 2.0 | 14.0 | 1354 | 0.55 | | 2462 |
| Comparative Example | C1 | Cyclohexane | 16.8 | 0.0 | 0.2 | 16.2 | 8380 | 0.90 | | 9311 |

**Claims**

1. A particle dispersion comprising particles and a liquid medium,
   wherein a distance of an HSP value of the particles with respect to an HSP value of the liquid medium is 15.0 MPa$^{0.5}$ or less.

2. The particle dispersion according to claim 1, wherein the distance of the HSP value of the particles with respect to the HSP value of the liquid medium is 7.5 to 15.0 MPa$^{0.5}$

3. The particle dispersion according to claim 1, wherein the liquid medium includes methyl isobutyl ketone.

4. The particle dispersion according to claim 1, wherein the liquid medium includes methyl ethyl ketone.

5. The particle dispersion according to any one of claims 1 to 4, wherein the liquid medium includes a first dispersion medium and a second dispersion medium, and
   a distance of an HSP value of the second dispersion medium with respect to an HSP value of the first dispersion medium is 5.0 to 15.0 MPa$^{0.5}$.

6. The particle dispersion according to any one of claims 1 to 4, wherein the liquid medium includes an organic solvent, and
   a content of the organic solvent is 80% by mass or more on the basis of a total mass of the liquid medium.

7. The particle dispersion according to any one of claims 1 to 4, wherein the particles contain at least one type selected from the group consisting of silica, ceria, alumina, titania, boron nitride, and calcium titanate.

8. The particle dispersion according to any one of claims 1 to 4, wherein the particles contain silica.

9. The particle dispersion according to any one of claims 1 to 4, wherein the particles have a surface treatment agent on surfaces of the particles.

10. The particle dispersion according to claim 9, wherein the surface treatment agent includes a silane compound having an alkoxysilyl group.

## INTERNATIONAL SEARCH REPORT

International application No.

**PCT/JP2024/036358**

| A. | CLASSIFICATION OF SUBJECT MATTER |
|---|---|

*B01J 13/00*(2006.01)i; *C01B 33/145*(2006.01)i
FI:  B01J13/00; C01B33/145

According to International Patent Classification (IPC) or to both national classification and IPC

| B. | FIELDS SEARCHED |
|---|---|

Minimum documentation searched (classification system followed by classification symbols)

B01J13/00; C01B33/145; C09D; C09K

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

JSTPlus/JMEDPlus/JST7580 (JDreamIII)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | 佐藤靖徳　ほか, 第６７回レオロジー討論会講演要旨集, 16 October 2019, 342-343 (SATO, Yasunori et al., Proceedings of the 67th Rheology Symposium) particularly, Table 1. | 1, 7-10 |
| X | Nihon Reoroji Gakkaishi, 07 May 2021 (received date), vol. 49, no. 4, pp. 251-260, DOI: 10.1678/rheology.49.251 particularly Table I | 1-2 |
| X | JP 2013-203929 A (ISHIHARA SANGYO KAISHA, LTD.) 07 October 2013 (2013-10-07) claims, paragraphs [0009]-[0029] | 1-2, 4-10 |
| Y | | 3 |
| Y | JP 2021-172755 A (DIC CORPORATION) 01 November 2021 (2021-11-01) paragraph [0044] | 3 |
| X | JP 2014-066757 A (FUJI XEROX CO., LTD.) 17 April 2014 (2014-04-17) paragraphs [0050]-[0052], [0212]-[0216] | 1-4, 6-10 |

✓ Further documents are listed in the continuation of Box C.　　　✓ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
|---|---|
| **11 December 2024** | **24 December 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

**INTERNATIONAL SEARCH REPORT**

| International application No. |
| --- |
| **PCT/JP2024/036358** |

**C.    DOCUMENTS CONSIDERED TO BE RELEVANT**

| Category* | Citation of document, with indication, where appropriate, of the relevant passages | Relevant to claim No. |
| --- | --- | --- |
| X | JP 2023-109448 A (TANAKA PRECIOUS METAL IND) 08 August 2023 (2023-08-08) claims, paragraph [0058] | 1-2 |
| X | WO 2020/213637 A1 (MAZDA MOTOR CORPORATION) 22 October 2020 (2020-10-22) paragraphs [0084]-[0089] | 1-2, 6-9 |
| X | JP 2020-164564 A (LINTEC CORPORATION) 08 October 2020 (2020-10-08) paragraphs [0038]-[0046] | 1-2, 4, 6-9 |
| Y | | 3 |

Form PCT/ISA/210 (second sheet) (July 2022)

**INTERNATIONAL SEARCH REPORT**
**Information on patent family members**

International application No.

**PCT/JP2024/036358**

| Patent document cited in search report | | | Publication date (day/month/year) | Patent family member(s) | | | Publication date (day/month/year) |
|---|---|---|---|---|---|---|---|
| JP | 2013-203929 | A | 07 October 2013 | (Family: none) | | | |
| JP | 2021-172755 | A | 01 November 2021 | (Family: none) | | | |
| JP | 2014-066757 | A | 17 April 2014 | (Family: none) | | | |
| JP | 2023-109448 | A | 08 August 2023 | EP<br>claims, table 1<br>TW | 4432310<br><br>202406648 | A1<br><br>A | |
| WO | 2020/213637 | A1 | 22 October 2020 | US<br>paragraphs [0131]-[0134]<br>EP<br>CN | 2022/0177320<br><br>3943449<br>113692392 | A1<br><br>A1<br>A | |
| JP | 2020-164564 | A | 08 October 2020 | (Family: none) | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2015519442 A

**Non-patent literature cited in the description**

- Compact Edition Solvent Pocketbook. Society of Synthetic Organic Chemistry. 1994